# EUROPEAN PATENT APPLICATION

(11) **EP 4 230 837 A1**
(43) Date of publication of application: **23.08.2023**
(21) Application number: 22157561.6
(22) Date of filing: 18.02.2022
(51) Int. Cl.: E21B 15/04, E21D 20/00, G06T 7/70, G06T 7/73

(54) **APPARATUS FOR POSITION DETECTION, MINE VEHICLE AND METHOD**

(71) Applicant: Sandvik Mining and Construction Lyon SAS, 69330 Meyzieu (FR)
(72) Inventor: POURCENOUX, Jérôme, 69330 Meyzieu (FR); DÉMIA, Laurent, 69330 Meyzieu (FR); DI FLORIO, Laurent, 69330 Meyzieu (FR); NADDAF, Guillaume, 69330 Meyzieu (FI); IEHLE, Arsène, 69330 Meyzieu (FR); DESBOIS, Pierre, 69330 Meyzieu (FR); EISELÉ, Bertrand, 38660 Le Touvet (FR); NICOLAS, Sylvain, 69330 Meyzieu (FR)
(74) Representative: Sandvik

(57) **Abstract**

An apparatus for position detection in a mine vehicle, a mine vehicle, and a method for monitoring and providing position data in a mining vehicle. The apparatus (10) comprises one or more sensing devices for generating position sensing data on one or more monitored elements. A control unit (CU) calculates position data in response to the received position sensing data. One or more cameras (11) are implemented as the sensing device. The monitored element is provided with several illuminating spots (12) providing the monitored element with patterns of spots (13). Then the camera generates position data on the several illuminating spots of the spot pattern. Further, the control unit calculates position and orientation of the monitored element in a three dimensional coordinate system.

## Description

### Background of the invention

The invention relates to an apparatus for providing position detection data in a mine vehicle.

The invention further relates to a mine vehicle and a method of producing position detection data.

The field of the invention is defined more specifically in the preambles of the independent claims.

In mines and at other work sites different type of mine vehicles are used. The mine vehicles are typically provided with one or more booms and mine working devices at distal ends of the booms. The mine vehicle may be designed to execute a mine work task at the work site by means of the mine working device. The mine vehicle and its mine work device need to be positioned to exact positions, which may be determined in a mine plan, for example. The boom may comprise one or more boom parts and joints between them. Controlling of the mine vehicle and the boom requires accurate detection of position and orientation. Currently sensing devices, such as wired sensors, are arranged on linear and rotating joints of booms and other working units. The present systems have shown to contain some disadvantages.

### Brief description of the invention

An object of the invention is to provide a novel and improved apparatus and method for providing position data. The invention further relates to a mine vehicle implementing the apparatus and method.

The apparatus according to the invention is characterized by the characterizing features of the first independent apparatus claim.

The mining vehicle according to the invention is characterized by the characterizing features of the second independent apparatus claim.

The method according to the invention is characterized by the charactering features and steps of the independent method claim.

An idea of the disclosed solution is that an apparatus is designed for position detection in a mining vehicle. The apparatus comprises one or more sensing devices configured to generate position sensing data on one or more monitored elements. One or more control units is configured to calculate position data in response to the received position sensing data. One or more cameras are used as the sensing devices. The monitored element is provided with several illuminating spots providing the monitored element with at least one pattern of spots. Then the camera is configured to generate position data on the several illuminating spots of the spot pattern. Further, the control unit is configured to calculate position and orientation of the monitored element in a three dimensional coordinate system.

An advantage of the disclosed solution is that position sensing can be implemented remotely without any physical sensors mounted to the monitored elements. This way the solution may be simple, durable, service free and inexpensive. The disclosed illuminating spots may be arranged to the monitored elements in a versatile manner.

Mounting of the illuminating spots on the monitored elements is easy and many spots can be used.

Further, in some cases one only camera may be enough for detecting one or more spot patterns mounted on one or more monitored elements.

According to an embodiment, the apparatus is configured to monitor several machine parts of the mining vehicle and each of monitored machine parts is provided with at least one dedicated spot pattern. This way the disclosed solution relates to a multi-pattern monitoring and measurement system.

According to an embodiment, the apparatus may implement a hybrid solution wherein the position data gathered by the disclosed monitoring system, based on the camera and the spot patterns, can be combined, or fused, with sensing data gathered from other type of position sensing devices, such as accelerometers, gyroscopes, rotation sensors, linear sensors, and other conventional type of sensors and measuring devices.

According to an embodiment, the apparatus comprises at least one camera with photosensitive elements.

According to an embodiment, the apparatus comprises at least two cameras. The cameras may be directed to the same view direction, whereby sensing results of one camera may be verified with another camera, and when there are obstacles blocking direct sight of view of one camera then another camera may still be able to execute sensing measures properly. Alternatively, the cameras may be located to different locations and may be configured to monitor their objects from different view directions. The two cameras may be located on the same part, such as on the carrier or the cabin or canopy to get a good view of the scene. It may also be possible to place one camera on a carrier and another on a desired boom or boom part, for example.

According to an embodiment, the apparatus is configured to update the sensing data almost in real time, whereby used sampling rate is >1Hz. The sampling rate may be 100Hz, for example.

According to an embodiment, the control unit of the apparatus is configured to identify the spot patterns from the sensing data produced by the camera by detecting individual predetermined shapes of the patterns of the illuminating spots. In other words, geometry, and design of the spot pattern itself may be different from other spot patterns.

According to an embodiment, the spot pattern arrangement may have a basic configuration which may made individual by using different settings in positions of the illuminating spots. This way the same basic structure may be tailored for different spot patterns.

According to an embodiment, a kind of mechanical coding based on physical relative locations of the light illuminating spots is implemented when forming the spot patterns. There may be different number of illuminating spots in the spot patterns and relative positions of the illuminating spots may vary. This way it is possible to form a great number of individual and predetermined configurations and shapes for different spot patterns.

According to an embodiment, the control unit of the apparatus is configured to identify the spot patterns from the sensing data produced by the camera by detecting individual predetermined shapes of the patterns of the illuminating spots according to position (orientation and distance) of the pattern in relation to the camera.

According to an embodiment, the spot pattern comprises at least three illuminating spots. In other words, three or more illuminating spots are required for the spot pattern for becoming properly detected by the position sensing system.

According to an embodiment, the spot pattern comprises at least five illuminating spots. An advantage of using greater number of illuminating spots as the minimum three is that the position detection can be executed also in situations when one or more of the illuminating spots have failed or are not on a line of sight of the camera or are aligned with the camera. In some cases, the illuminating spots may be hidden by another illuminating spot, or the illuminating spots may be in a plane including the camera.

According to an embodiment, number of the illuminating spots in one spot pattern may be 5 - 12, or even more, up to 20. Number of the illuminating spots can be increased when due to the kinematic of the monitored element there is a risk that part of the pattern can be hidden and not seen by the at least one camera.

According to an embodiment, the spot pattern comprises large number of illuminating spots and at least five spots need to be detected by the camera whatever the position of the monitored element can take.

According to an embodiment, the apparatus has at least one camera position of which is known in a machine coordinate system of the mining vehicle and the position data is used as a reference point for the gathered position data.

According to an embodiment, the spot pattern comprises a frame and the several illuminating spots are mounted to the frame. In other words, the frame provided with the several illuminating spots may be a preassembled unit which is mounted in one piece on the monitored movable machine part.

According to an embodiment, the frame comprises mounting means such as screws, screw holes, clamps, quick coupling means, glue mounting means, or magnetic fastening means, for example.

According to an embodiment, the frame can have predetermined shape and may be calibrated. According to an embodiment, the spot pattern is alternatively of directly mounted type. Then each of the illuminating spots are mounted directly on one or more surfaces of the monitored element.

According to an embodiment, the spot pattern may comprise several controllable illuminating spots which can be switched on and off for providing the spot pattern with an electrical coding. Then it is possible to activate and deactivate desired illuminating spots for generating different patterns. In other words, the same basic pattern of the illuminating spots can be implemented for several different spot patterns without any physical modifications or settings. The illuminating spots may be controlled remotely by means of a control unit, or by a separate electrical terminal device, for example. Alternatively, the spot pattern and its illuminating spots can be coded when being installed to the monitored element. In one simple embodiment the illuminating spots may be provided with switches, such as micro-switches, for selecting their on/off status.

According to an embodiment, the spot pattern may comprise several controllable illuminating spots which can be switched on and off for providing a communication protocol. Then blinking of spots can be implemented when transmitting data. The spot can serve as an emitter and the camera can serve as a receiver. An advantage of this solution is that sensing and other data can be transmitted by means of wireless communication based on light transmission.

According to an embodiment, the spot pattern or its illuminating spots are provided with protective elements for protecting them against dirt and external forces. Furthermore, there may be cleaning means in connection with them, such as water or air jets.

According to an embodiment, the frame of the spot pattern is mounted movably to the monitored element. Then the spot pattern may be moved to a use position and storage position. Alternatively, or in addition to, the spot pattern may be moved between two predetermined positions, whereby the spot pattern can be moved so that it is visible by the camera of the sensing system.

According to an embodiment, the apparatus comprises at least two cameras. In other words, the apparatus may implement several cameras each having different view angle and location. An advantage of the use of several cameras is that reliable sensing and monitoring can be executed also in situations when the camera cannot directly see the spot pattern, i.e., when there is no direct line of sight.

According to an embodiment, one or more cameras are on the carrier and one or more cameras are on one or more boom parts or on one or more mining work units.

According to an embodiment, one or more cameras may be facing towards normal driving or operational direction of the mining vehicle and one or more cameras be facing towards the opposite direction i.e., towards reverse direction.

According to an embodiment, the solution described in the previous paragraph is implemented to take a reference on a past tunnel or mine gallery, such as an already drilled or operated part, face, or fan of the mine.

According to an embodiment, one or more cameras may be arranged to detect spot patterns external to the mining vehicle. Thereby, spot patterns mounted on rock surfaces, or other locations at the work site may be detected by means of these cameras.

According to an embodiment, the one or more external spot patterns mounted on rock surfaces, such as on mine gallery walls, ceiling, or face surface of a tunnel, can be implemented as a fixed reference, or as a so called earth or gallery reference. Position of the reference spot pattern in a mine coordinate system is known. Then the drilling unit can be positioned in accordance with the position data provided with the external spot patterns. The camera can detect simultaneously spot patterns mounted on the movable machine parts as well as these external reference spot patterns. The control unit can calculate relative positions of the spot patterns and can determine also positions is mine coordinate system. An advantage is that the reference spot patterns can be mounted beforehand whereby the actual drilling operation can be executed fast and safely since no separate measurements needs to be done at the drilling site.

According to an embodiment, one or more cameras may be arranged movably so that they can be moved between at least two predetermined positions. Then there may be one or more sensing positions and one storage position. An advantage of the movable arrangement is that view angle of the camera can be changed if needed, and further, that the camera can be moved to the storage position when it is not used or when operating in harsh conditions.

According to an embodiment, the apparatus has only one camera. The camera may have one fixed position, or it may be movable between two, three or even more positions.

According to an embodiment, the illuminating spots are active light sources producing light which is detectable by means of photosensitive elements of the at least one camera. In other words, the apparatus comprises one or more spot patterns provided with active light points or sources which are detected by the camera. The active light points are well detectable, and their properties can be adjusted in a versatile manner.

According to an embodiment, the light produced by the active light source is visible light. Visible light is a range of spectrum of electromagnetic radiation that is visible for human eye. Typically, a human eye responds to wavelengths from about 380 to about 750 nanometers. Thus, the visible light falls in the range of the EM spectrum between infrared (IR) and ultraviolet (UV).

According to an embodiment, the light produced by the active light source is non-visible light. Since the sensing is based on machine-reading, the use of non-visible light is suitable. Further, it may be advantageous to use non-visible light for the sensing because the light spots are not visible to an operator of the mining vehicle and thereby do not hamper manual controlling measures.

According to an embodiment, the active light spots may be individual light sources whereby each of them can be controlled individually by means of the control unit of the apparatus.

According to an embodiment, it is also possible to mix the solutions in the above disclosed three paragraphs.

According to an embodiment, the illuminating spots are alternatively reflectors which are configured to reflect light transmitted form one or more separate light sources. Thus, the reflectors serve as non-active illuminating sources. The used light may be visible or non-visible. The separate light sources may be mounted on the carrier.

According to an embodiment, the illuminating spots are light emitting diodes (LED). In other words, the apparatus comprises one or more spot patterns each of which comprises several LEDs. Photosensitive elements of the one or more cameras detect the light produced by the LEDs. Then the camera of the disclosed position measurement system detects predefined pattern formed by the several LEDs. An advantage of the LEDs is that they are durable and have low power consumption. The LEDs can also be utilized in a versatile manner as the light illuminating spots. A further advantage is that the LEDs may be small sized whereby they are easy to mount on different monitored machine parts.

According to an embodiment, the LEDs can be used for coding different patterns. The code formed by the LEDs can be easily changed and updated. The changes can be made remotely by means of the control unit.

According to an embodiment, the spot patterns may blink with dedicated frequencies i.e., each spot pattern may have a frequency of its own. Then the control unit can recognize each spot pattern from the sensing data by the dedicated frequencies of blinking.

According to an embodiment, the spot patterns may be provided with dedicated frequencies of radiation i.e., each spot pattern may have a frequency of its own. Then the control unit can recognize each spot pattern from the sensing data by the dedicated frequency of radiation. When visible light is used then the spots may have different colors with different frequencies.

According to an embodiment, when there are several spot patterns and movable machine parts to be monitored, then the spot patterns may be switched on one at a time. Thus, the spot patterns are activated alternatively under control of the control unit, whereby there is no risk to misinterpret the sensing results.

According to an embodiment, the LEDs used in different spot patterns may have different wavelengths. Then the control unit may recognize each spot pattern based on the LEDs emitting with different wavelengths even when geometrically similar spot patters are implemented.

According to an embodiment, the LEDs may emit visible light or non-visible light.

According to an embodiment, the LEDs may be provided with dedicated batteries or there may be one common battery for the LEDs in connection with the spot pattern arrangement.

According to an embodiment, the monitored element is a movable machine part of a mining vehicle.

According to an embodiment, the monitored element is alternatively a reference element mounted to a surrounding surface or structure, such as wall of a mine gallery. In other words, the monitored element is located externally to the mining vehicle. Then the goal may be to locate the mining machine and the mining work device according to detecting data of the monitored element, which is serving as an external reference point. In addition to the external reference element there may also be one or more monitored elements mounted to movable machine parts of the mine vehicle.

According to an embodiment, the control unit is configured detect positions of monitored movable machine parts at first in machine coordinate system of the mine machine and may implement position data of the external reference spot patterns to convert the position data of the movable machine parts into mine coordinate system. The positions of the machine parts can then be examined in mine coordinate system if so desired. Also position and other data of drilled holes can be recorded in the mine coordinate system and can be compared with mine and excavation plans.

According to an embodiment, the monitored element is a movable machine part of the mining vehicle and is provided with at least two separate spot patterns arranged on different surfaces of the machine part. In other words, two or more spot patterns are arranged on differently orientated surfaces on the movable machine part for ensuring that at least one of the spot patterns is detectable by the at least one camera. This way the machine part can be monitored also in situations when direct line of sight is lost between one spot pattern and the camera. For example, in case another boom or other movable machine part is preventing sight of the camera towards one spot pattern, then another spot pattern is still readable. Also, when the monitored machine part is moved to a pose wherein one spot pattern cannot be detected, the one or more other spot patterns may still be detectable. Thus, an advantage of this embodiment is that detection reliability is improved.

According to an embodiment, the disclosed solution relates to a mining vehicle comprising: a movable carrier; at least one machine part movable relative to the carrier; at least one mining work device; and at least one apparatus for providing position data of at least one monitored element. Further, the apparatus is in accordance with the features and embodiments disclosed in this document.

According to an embodiment, the apparatus is configured to determine position of the at least one movable machine part or mining work device. In other words, any movable machine part of the mining vehicle, including the mining work device, may be provided with the spot pattern so that its position can be detected by means of the position detecting apparatus.

According to an embodiment, the solution mentioned in the previous paragraph can be implemented for detecting absolute positions i.e., coordinates of selected one or more machine parts, or it may be implemented to detect relative positions of two or more selected machine parts. The position of the monitored part may be detected relative to the mining machine, or relative to the rock surface.

According to an embodiment, the mining vehicle is an underground mining vehicle or machine. At underground working sites the general ambient light does not cause problems for the sensing. At space limited underground corridors there are typically no other light sources which could hamper sensing measures based on use of light signals. Thus, the disclosed sensing apparatus suits well for underground use.

According to an embodiment, the mining vehicle is a rock bolting rig, a charging rig, a shotcrete rig, an exploration drilling rig, an excavator provided with a mine work device such as a hydraulic hammer, a mine truck, or a wheel loader.

According to an embodiment, the mining vehicle is a rock drilling rig comprising one or more drilling booms provided with dedicated rock drilling units. Each drilling boom, and possibly each movable boom part of the one or more drilling booms, may have one or more dedicated spot patterns. Furthermore, each drilling unit may comprise one or more spot patterns mounted to feed beams and rock drilling machines of the drilling units.

According to an embodiment, the mining vehicle is a rock drilling rig comprising at least one drilling boom provided with a rock drilling unit comprising a feed beam and a rock drilling machine arranged movably on the feed beam; and wherein the rock drilling_machine is provided with the at least one spot pattern whereby position of the rock drilling machine on the feed beam is detected. In other words, the rock drilling machine is the mentioned mining work device. It is not only the mining work device but also the movable machine part positions of which are monitored.

According to an embodiment, the position of the rock drilling machine is determined and monitored for determining length of the drill hole being drilled, i.e., hole depth.

According to an embodiment, the position of the rock drilling machine is determined and monitored for providing data for a drilling control system. The data may be utilized when coupling and uncoupling_components of drilling tools, for example.

According to an embodiment, the mining vehicle is a rock drilling rig comprising at least two drilling booms provided with rock drilling units comprising feed beams and rock drilling machines arranged movably on the feed beams;
and wherein at least two of the feed beams are provided with the spot patterns whereby positions and orientations of the feed beams is detected.

According to an embodiment, the mining vehicle comprises at least two booms provided with rock drilling units comprising feed beams and rock drilling machines arranged movably on the feed beams;
and wherein at least two of the booms and drilling units are provided with the spot patterns whereby positions and orientations of the booms and drilling units are detected.

According to an embodiment, the positions of the booms of the rock drilling rigs are determined and the positions are monitored for providing data for a collision avoidance system for preventing collisions between the booms.

According to an embodiment, the disclosed solution can be used to manage parallelism of the feed. The orientation of the feed beam may be set and then when the drilling boom is moved, the control unit controls articulations of the drilling boom and a joint between the boom and the feed beam to ensure that the orientation of the feed beam is kept the same.

According to an embodiment, the disclosed solution can be implemented to keep orientation settings of the mining work device when managing its movement from one position to another position.

According to an embodiment, the booms are provided with actuators for moving articulated boom parts relative to each other and actuators for moving the entire boom relative to the carrier. The actuators and/or joints of the booms may be provided with the disclosed spot patterns. Position data gathered from the actuators and/or joints can be implemented in managing parallelism of the booms. The control unit may be provided with one or more 3D models of the mechanics and dimensions of the boom structures, and when provided with the disclosed sensing data, the control unit can calculate positions and orientations of the booms. The control system may also estimate movement paths of the booms and may execute collision prevention measures for ensuring safe and effective operation. The control system may stop movements causing collisions and may forbid boom movements until they are safe.

According to an embodiment, the apparatus comprises a collision avoidance system configured to monitor positions of the illumination spots of at least two separate spot patterns and is configured to notify when the illumination spots of the separate spot patterns are moved closer than a predetermined limit distance from each other and is configured to execute a signal for activating collision preventing measures in case there exists shorter distances as the predetermined safe distance.

According to an embodiment, the collision avoidance system or anti-collision system may be based on 3D model of drilling booms and feed beams with or without a certain margin. The 3D model may be referenced with the associated spot pattern. The control unit may calculate relative positions between the 3D models.

According to an embodiment, the collision avoidance system or anti-collision system may be configured to detect externally positioned spot patterns and may take into account them for preventing collisions to rock surfaces. In other words, the system compares positions of movable machine parts to positions of the reference spot patterns.

According to an embodiment, the apparatus comprises a collision avoidance system configured to prove bounding boxes to surround all illuminating spots. Then the apparatus is configured to examine by means of the anticollision system that the bounding boxes of two different spot patterns do not cross each other.

According to an embodiment, the mining vehicle is a charging vehicle provided with at least one charging head for feeding charging material into drill holes for blasting a rock surface. Then the charging head and a boom of other moving mechanism may be provided with the disclosed spot patterns.

According to an embodiment, the disclosed solution relates to a method of monitoring and providing position data in a mining vehicle. The method comprises: generating position sensing data on at least one monitored element by means of at least one sensing device; and calculating position data by means of at least one control unit in response to the generated position sensing data. The method further comprises: using at least one camera as the sensing device; providing the monitored element with several illuminating spots whereby the monitored element is provided with at least one pattern of spots; generating position data on the several spots of the spot pattern by means of the camera; calculating position and orientation of the monitored element in a three dimensional coordinate system by means of the control unit.

According to an embodiment, the method comprises: providing several machine parts of one mining vehicle with individually detectable spot patterns; and monitoring simultaneously position and orientation of several machine parts by means of at least one camera.

According to an embodiment, at least one spot pattern is arranged on the earth referential like on mine gallery wall. Then the apparatus monitors relative position and orientation of the monitored moving parts with the earth referential by means of at least one camera. Then the goal of this embodiment is to set and define the referential of calculation in accordance with the earth referential. When implementing the solution where the spot pattern is mounted on the movable machine part, the known position of the camera is used as a known reference point.

According to an embodiment, the control unit can manage dedicated movement of the moving part in accordance with the position and orientation of the said moving part monitored by the at least one camera and in accordance with instructions or setpoints. Typically, this is implemented when managing parallelism, automatic face drilling etc.

According to an embodiment, the disclosed solution is configured to measure or manage drill hole characteristics like position, orientation, and depth. Then at least one spot pattern is located on a rock drilling machine.

According to an embodiment, the basic principles of the position detecting system based on the spot patterns and calculation of position data is disclosed for example in documents EP-0607303-B1 and EP-0880674-B1.

The above disclosed embodiments may be combined in order to form suitable solutions having those of the above features that are needed.

### Brief description of the figures

Some embodiments are described in more detail in the accompanying drawings, in which
Figure 1 is a schematic side view of a rock drilling rig provided with several drilling booms and means for determining poses of the booms and the surroundings,
Figure 2 is a schematic diagram showing basic features of an apparatus configured to provide sensing data in a mine vehicle,
Figure 3 is a schematic diagram showing some features and alternatives of an illuminating spot,
Figure 4 is a schematic diagram showing some feature of a spot pattern,
Figure 5 is a schematic side view of an active illuminating spot provided with a light source,
Figure 6 is a schematic side view of a blinking illuminating spot,
Figure 7 is a schematic side view of a reflector serving as an illuminating spot,
Figure 8 is a schematic top view showing a frame provided with several selectable installation positions for illuminating spots,
Figure 9 is a schematic side view of rock drilling unit provided with spot patterns on its movable parts, and
Figure 10 is a schematic side view of a boom part and a feed beam both being surrounded by virtual bounding boxes and provided with spot patterns.

For the sake of clarity, the figures show some embodiments of the disclosed solution in a simplified manner. In the figures, like reference numerals identify like elements.

### Detailed description of some embodiments

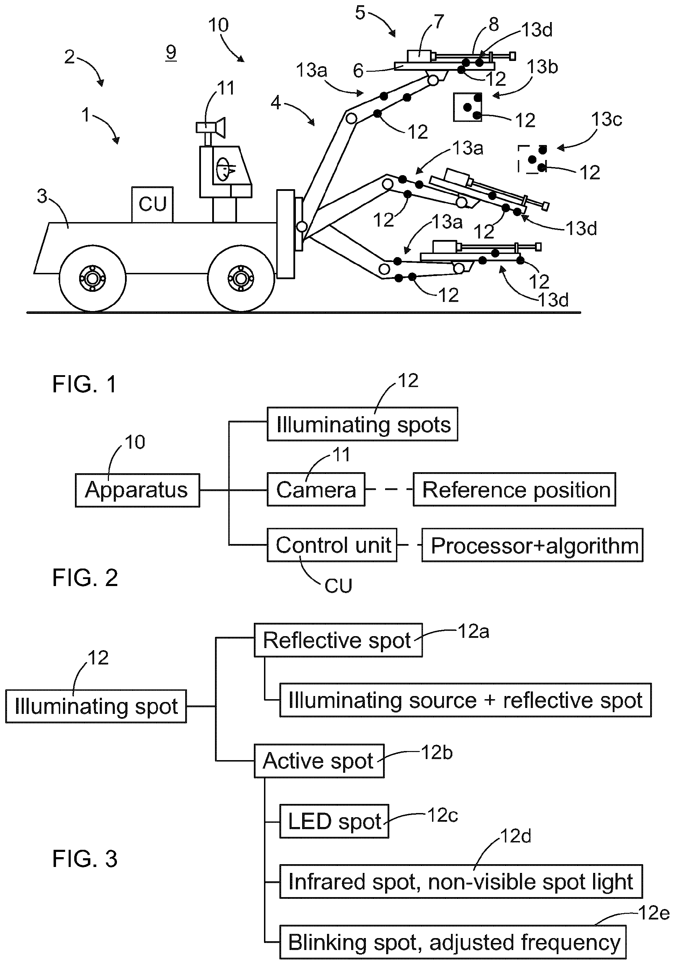

Figure 1 discloses a rock drilling rig 1 as an example of a mine vehicle 2. Also, rock bolting rigs, charging rigs, mine trucks, and wheel loaders are mine vehicles 2. The disclosed method and solution may be applied in all type mine vehicles 2 comprising movable elements position and orientation of which need to be monitored.

The rock drilling rig 1 comprises a movable carrier 3 and one or more booms 4 connected to the carrier 3. At a distal end portion of the boom 4 may be a drilling unit 5. The drilling unit 5 may comprise a feed beam 6 and a rock drilling machine 7 supported movably on it. The rock drilling machine 7 may comprise a shank at a front end of the rock drilling machine 7 for connecting a tool 8.

In Figure 1 the rock drilling rig 1 is operating in an underground mine space 9, which may be a tunnel, storage hall or corridor, for example. The mine space 9 may comprise a face surface, wall surfaces and a roof surface.

The rock drilling rig 1 may be provided with an apparatus 10 for providing sensing data on one or more monitored elements or objects. The apparatus 10 is in accordance with the features and embodiments disclosed in this document and comprises one or more cameras 11, one or more control units CU, and several illuminating spots 12 arranged on the one or more monitored elements. As can be noted, the illuminating spots 12 can create different patterns of spots i.e., spot patterns 13 so that different monitored elements can be identified on the basis of the different patterns they form. The spot patterns 13a can be mounted to movable machine parts, such as boom parts 4a, 4b, or to parts and devices of the rock drilling unit 5, such as feed beam. Alternatively, or in addition to, one or more spot patterns 13b may be mounted to surfaces of the underground mine space 9, or to any other structure outside the rock drilling rig 1. The camera 11 detects the illuminating spots 12 and the sensing data is transmitted to the control unit CU which processes the data and calculates position and orientation data. The control unit CU may be a separate device in respect to the camera 11, or it may be integrated in connection with the camera 11. The control unit CU may define positions of the spot patterns 13a in relation to position of the camera 11, which position data is input to the control unit CU. Position data of the external spot pattern 13b, if it is implemented, is also input to the control unit CU, whereby it can serve as a fixed reference point when positioning the entire mine vehicle 2 in the mine. It may be possible to generate relative position data between the several movable spot patterns 13a, and also between the fixed spot pattern 13b and one or more of the movable spot patterns 13a. The control unit CU can also give instructions to control actuators in order to manage according to setpoint the movement and the position of the moveable parts.

The setpoint may comprise instructions of positions, orientations, angles and other parameters set or selected.

By means of the fixed reference spot pattern 13b the mine vehicle 2 can be combined to a mine coordinate system. The mine vehicle 2 itself may have a machine coordinate system. Further, it is possible to use movable markers or tags which are provided with additional spot patterns 13c. Then it is possible to place such markers to desired locations in the mine and the ensure that the system notes them and records the indicated positions to the system. The markers 13c may be manually movable marking sticks, for example. The goal is to manage feed movement or drilling machine movement according to an earth reference, such as a drilling pattern, direction of the tunnel, etc.

Figure 2 discloses basic composition of the disclosed apparatus 10. The apparatus 10 comprises several illuminating spots 12 mounted to one or more elements being monitored, and one or more cameras 11 for detecting the illuminating spots 12. The position of the camera 11 may implemented as a reference position for the position sensing. The sensing data is transmitted to the one or more control units CU. The data transmission may be wired or wireless. The control unit CU comprises a processor or data processing device for executing a program or algorithm for processing and calculating sensing data received from the camera 11.

Figure 3 discloses that the illuminating spot 12 may be a reflective spot 12a or an activate spot 12b. The reflective spot 12a can be illuminated by means of a separate illuminating source, whereas the active spot 12b may comprise an integrated illuminating source. The active spot 12b may be a LED spot 12c or an infrared spot 12d, for example.

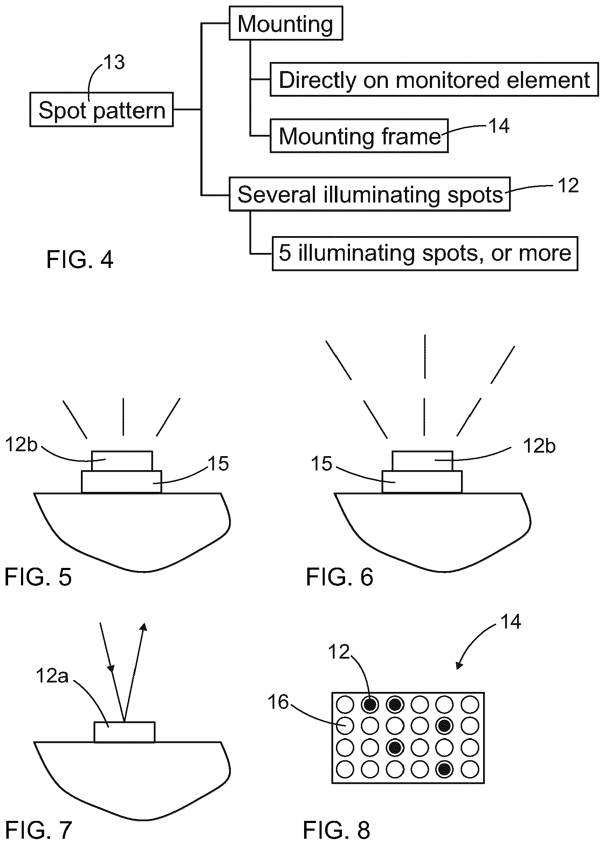

Figure 4 discloses some features relating to the spot pattern 13. The spot pattern 13 may comprise a mounting frame 14 for mounting the illuminating spots 12 of the spot pattern 13 to the monitored element. Alternatively, the illuminating spots 12 are mounted each directly to the monitored element. Number of the illuminating spots 12 is preferably five or more.

Figure 5 discloses an active spot 12b, such as a LED spot, which may be mounted to a surface of the monitored element by means of a fastening element 15, which may be a magnetic holder, or a holder implementing sticker, glue, or screw mounting principles.

Figure 6 discloses an active spot 12b provided with a blinking feature. The blinking may be implemented for coding the spot, for example.

Figure 7 discloses a reflective spot 12a which can reflect coming light back so that the reflected light can be detected by a camera.

Figure 8 discloses a frame 14 comprising several mounting places 16, such as recesses, for receiving illuminating spots 12. The frame 14 facilitates forming different spot patterns and calibration.

Further, the frame can be calibrated in a standalone way and can then be mounted on the monitored element.

The frame may be a planar piece, or it may alternatively be a piece with three dimensional shapes so that the illuminating spots can be visible in several directions. The frame may be an angled piece, or a skeleton, for example. Further, the three-dimensional spot pattern can surround the monitored element, such as the feed beam, for increasing visibility.

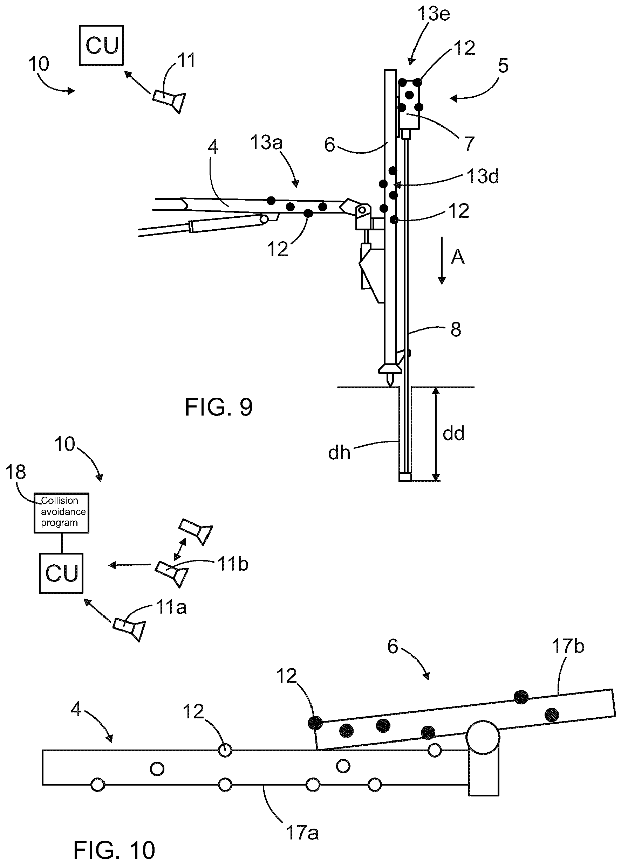

Figure 9 discloses a rock drilling unit 5 mounted to a drilling boom 4. A feed beam 6 and a rock drilling machine 7 of the drilling unit 5 are provided with spot patterns 13d and 13e so that positions of these monitored elements can be determined. By examining relative positions of the feed beam 6 and the drilling machine drill depth dd of a drill hole dh can be detected. When the rock drilling machine 7 is fed in drilling direction A, this movement in relation to the feed beam 6 can be sensed. The boom 4 may also be provided with one or more spot patterns 13a. An apparatus 10 for detecting the positions comprises one or more cameras 11 and one or more control units CU.

Figure 10 discloses that a boom 4 and a feed beam 6 may be provided with illuminating spots 12 and that boundary boxes 17a, 17b are created to surround the boom 4 and the feed beam 6. An apparatus 10 comprises a control unit CU provided with a collision detection program 18. Then the control unit CU can monitor movements of the boundary boxes 17a, 17b and may prevent them to collide. The disclosed apparatus 10 comprises two cameras 11a, 11b, wherein the camera 11b is movable between two operations positions or between an operational position and a storage position. However, the disclosed collision avoidance system and the boundary boxes can also be implemented when monitoring collisions between two booms of the mining machine.

The drawings and the related description are only intended to illustrate the idea of the invention. In its details, the invention may vary within the scope of the claims.

## Claims

1. An apparatus (10) for position detection in a mining vehicle (2);
wherein the apparatus (10) comprises:
at least one sensing device configured to generate position sensing data on at least one monitored element;
and at least one control unit (CU) configured to calculate position data in response to received position sensing data;
**characterized in that**
the sensing device is a camera (11);
the monitored element is provided with at least three illuminating spots (12) providing the monitored element with at least one pattern of spots (13);
the camera (11) is configured to generate position data on the several illuminating spots (12) of the spot pattern (13);
and the control unit (CU) is configured to calculate position and orientation of the monitored element in a three dimensional coordinate system.

2. The apparatus as claimed in claim 1, **characterized in that**
the control unit (CU) of the apparatus (10) is configured to identify the spot patterns (13) from the sensing data produced by the camera (11) by detecting individual predetermined shapes of the patterns (13) of the illuminating spots (12).

3. The apparatus as claimed in claim 1 or 2, **characterized in that**
the apparatus (10) has at least one camera position of which is known in a machine coordinate system of the mining vehicle (2) and the position data is used as a reference point for the gathered position data.

4. The apparatus as claimed in any one of the preceding claims 1 - 3, **characterized in that**
the spot pattern (13) comprises a frame (14) and the several illuminating spots (12) are mounted to the frame (14) .

5. The apparatus as claimed in any one of the preceding claims 1 - 4, **characterized in that**
the apparatus (10) comprises at least two cameras (11a, 11b).

6. The apparatus as claimed in any one of the preceding claims 1 - 5, **characterized in that**
the illuminating spots (12) are active light sources (12b) producing light which is detectable by means of photosensitive elements of the at least one camera (11).

7. The apparatus as claimed in claim 6, **characterized in that**
the illuminating spots (12) are light emitting diodes (LED) (12c).

8. The apparatus as claimed in any one of the preceding claims 1 - 7, **characterized in that** the monitored element is a movable machine part of a mining vehicle (2) .

9. The apparatus as claimed in any one of the preceding claims 1 - 8, **characterized in that**
the monitored element is a movable machine part of the mining vehicle (2) and is provided with at least one spot pattern (13) arranged to cover several surfaces of the machine part.

10. A mining vehicle (2) comprising:
a movable carrier (3);
at least one machine part movable relative to the carrier (3);
at least one mining work device; and
at least one apparatus (10) for providing position data of at least one monitored element;
**characterized in that**
the apparatus (10) is in accordance with any one of the preceding claims 1 - 9.

11. The mining vehicle as claimed in claim 10, **characterized in that**
the apparatus (10) is configured to determine position of the at least one movable machine part or mining work device.

12. The mining vehicle as claimed in claim 11, **characterized in that**
the mining vehicle (2) is a rock drilling rig (1) comprising at least one drilling boom (4) provided with a rock drilling unit (5) comprising a feed beam (6);
and wherein the feed beam is provided with the at least one spot pattern (13e) whereby position of the feed beam linked with the boom is detected.

13. The mining vehicle as claimed in claim 11 or 12, **characterized in that**
the mining vehicle (2) is a rock drilling rig (1) comprising at least one drilling boom (4) provided with a rock drilling unit (5) comprising a feed beam (6) and a rock drilling machine (7) arranged movably on the feed beam (6);
and wherein the rock drilling machine (7) is provided with the at least one spot pattern (13e) whereby position of the rock drilling machine (7) on the feed beam (6) is detected.

14. The mining vehicle as claimed in claim 13, **characterized in that**
the control unit (CU) configured to calculate position data of the rock drilling machine (7) in response to received position sensing data;
and the control unit (CU) is configured to determine depth of a drill hole in response to the calculated position data of the rock drilling machine (7).

15. The mining vehicle as claimed in any one of the preceding claims 11 - 14, **characterized in that**
the mining vehicle (2) is a rock drilling rig (1) comprising at least two drilling booms (4) provided with rock drilling units (5) comprising feed beams (6) and rock drilling machines (7) arranged movably on the feed beams (6) ;
and wherein at least two of the feed beams (6) are provided with the spot patterns (13d) whereby positions and orientations of the feed beams (6) are detected.

16. The mining vehicle as claimed in any one of the preceding claims 11 - 15, **characterized in that**
the positions of the boom (4) and the drilling unit (5) are monitored for providing data for piloting the feed position and/or orientation according to a specific set of setpoints by defining or keeping some angles in a machine coordinate system, or to move a front end of the feed beam from one drill hole to a new drill hole position.

17. The mining vehicle as claimed in any one of the preceding claims 11 - 16, **characterized in that**
the mining vehicle (2) comprises at least two booms (4) provided with rock drilling units (5) comprising feed beams (6) and rock drilling machines (7) arranged movably on the feed beams (6);
and wherein at least two of the booms (4) and drilling units (5) are provided with the spot patterns (13) whereby positions and orientations of the booms (4) and drilling units (5) are detected;
and wherein the positions of the booms (4) and drilling units (5) are monitored for providing data for a collision avoidance system for preventing collisions between the booms (4).

18. The mining vehicle as claimed in any one of the preceding claims 10 - 17, **characterized in that**
the apparatus (10) is configured to determine position of the at least one pattern of spots (13) which is located on at least one surface of a mine gallery and is thereby configured to serve as one of the monitored elements.

19. The mining vehicle as claimed in claim 18, **characterized in that**
the drilling unit position and orientation is set according to position or orientation of at least one pattern of spots on the surface of the mine gallery and a set of setpoints.

20. A method of monitoring and providing position data in a mining vehicle (2);
the method comprises:
generating position sensing data on at least one monitored element by means of at least one sensing device;
calculating position data by means of at least one control unit (CU) in response to the generated position sensing data;
**characterized by**
using at least one camera (11) as the sensing device;
providing the monitored element with several illuminating spots (12) whereby the monitored element is provided with at least one pattern of spots (13);
generating position data on the several spots (12) of the spot pattern (13) by means of the camera (11);
calculating position and orientation of the monitored element in a three dimensional coordinate system by means of the control unit (CU).

21. The method of claim 20, **characterized by** providing several monitored elements with individually detectable spot patterns (13); and
monitoring simultaneously position and orientation of several monitored elements by means of at least one camera (11).
